# EUROPÄISCHE PATENTSCHRIFT

(11) **EP 3 378 198 B1**
(45) Veröffentlichungstag und Bekanntmachung des Hinweises auf die Patenterteilung: **04.09.2019**
(21) Anmeldenummer: 16798103.4
(22) Anmeldetag: 07.11.2016
(51) Int. Cl.: H04L 12/40, H04L 12/413, H04L 12/707, H04L 12/803, H04L 12/10, H02M 3/22

(54) **VORRICHTUNGEN UND VERFAHREN ZUR ÜBERTRAGUNG EINES KOMMUNIKATIONSSIGNALS UND VON ELEKTRISCHER LEISTUNG ZWISCHEN ZWEI TEILNEHMERSTATIONEN EINES BUSSYSTEMS**
APPARATUSES AND METHODS FOR TRANSMITTING A COMMUNICATION SIGNAL AND ELECTRIC POWER BETWEEN TWO USER STATIONS OF A BUS SYSTEM
DISPOSITIFS ET PROCÉDÉ DE TRANSMISSION D'UN SIGNAL DE COMMUNICATION ET D'UNE PUISSANCE ÉLECTRIQUE ENTRE DES STATIONS D'ABONNÉ D'UN SYSTÈME DE BUS

(30) Priorität: 16.11.2015 DE 102015222546
(43) Veröffentlichungstag der Anmeldung: 26.09.2018
(73) Patentinhaber: Robert Bosch GmbH, 70442 Stuttgart (DE)
(72) Erfinder: NICKEL, Patrick, 63633 Birstein (DE)
(86) Internationale Anmeldenummer: PCT/EP2016/076780
(87) Internationale Veröffentlichungsnummer: WO 2017/084900

(56) Entgegenhaltungen:
- WO-A1-2011/006839
- DE-B3-102012 110 732
- US-A- 5 444 608
- US-A1- 2013 169 421

## Beschreibung

### Technisches Gebiet

Die vorliegende Erfindung betrifft Vorrichtungen und Verfahren zur Übertragung eines Kommunikationssignals und von elektrischer Leistung zwischen zwei Teilnehmerstationen eines Bussystems, wobei die Vorrichtungen und das Verfahren eine Stromversorgung über ein hochfrequentes Signal gewährleisten und dadurch auch für ein CAN-Bussystem eine Übertragung des Kommunikationssignals und von elektrischer Leistung auf einer Leitung ermöglichen.

### Stand der Technik

Das CAN-Bussystem kommt bei einer Kommunikation zwischen Sensoren und Steuergeräten, beispielsweise in Automobilen, zum Einsatz. Beim CAN-Bussystem werden Nachrichten mittels des CAN-Protokolls übertragen, wie es in der CAN-Spezifikation in der ISO11898 beschrieben ist.

Für die Verkabelung von Sensor(en) und Steuergerät(en) sind in der Regel für die Kommunikation zwischen Sensor und Steuergerät und für die Stromversorgung des Sensors und des Steuergeräts separate Leitungen notwendig. Dies erfordert eine große Anzahl an Leitungen, was einen großen Material und Platzbedarf, einen hohen Aufwand für die Installation und außerdem eine hohe Brandlast verursacht.

Zur Lösung dieser Probleme wurden Technologien, wie die Powerline-Kommunikation oder Power-over-Dataline bzw. Power over Ethernet (PoE) vorgeschlagen, gemäß welchen eine gemeinsame Nutzung von Leitungen zur Kommunikation und Stromversorgung möglich ist.

Die Powerline-Kommunikation nutzt für die Kommunikation eine existierende Stromversorgungsleitung eines Stromversorgungsnetzes, das z.B. in Gebäuden insbesondere mit Spannungen von 110 V, 230 V, usw., im Fahrzeug mit Spannungen von 12 V, usw., betrieben wird. Hierbei wird auf den elektrischen Strom für die Stromversorgung zusätzlich ein Signal mit einem hochfrequenten Übertragungsspektrum aufmoduliert und über die Stromversorgungsleitung übertragen. Problematisch an diesem Verfahren ist jedoch, dass dessen Kosten und damit Effizienz bei Kombination von hohen Datenraten, also einer großen Menge von Kommunikationsdaten pro Zeiteinheit, mit hohen Strömen bzw. einer hohen Verbraucherleistung stark nachlässt, da teure Zusatzkomponenten notwendig sind.

Außerdem wäre es möglich, ein als Power-over-Dataline bzw. Power over Ethernet (PoE) bekanntes Verfahren zu nutzen. Hierbei wird bei einer geschalteten geswitchten (Ethernet-) Architektur eine Punkt-zu-Punkt-Verbindung zwischen End-/Knotenpunkten als Teilnehmerstationen genutzt, wie beispielsweise einem Sensor, einer elektronischen Steuereinheit (ECU, Controller), einem Switch. Zur Ein-/Auskopplung bzw. Entkopplung (Splitter) von Gleichstrom (DC) und hochfrequentem Kommunikationssignal (HF-Kommunikationssignal) werden an allen End-/Knotenpunkten u.a. Transformatoren verwendet. Die Entkopplung wird durch einen Splitter vorgenommen, welcher eine Kombination aus Hoch- und Tiefpassfilter darstellt. Die Trenn- oder Grenzfrequenz zur Entkopplung wird sehr tief gelegt, so dass auch existierende Kommunikationssysteme an den fehlenden bzw. nicht nutzbaren DC-Anteil angepasst werden können.

Jedoch können beide Lösungen nicht für das existierende CAN-Bussystem zum Einsatz kommen, da ohne eine aufwändige und daher teure Modifikation der Steuergeräte (Controller, ECU) oder eine Modulation keine Trennung des Gleichspannungsanteils (DC-Anteils) erfolgen kann. Der Grund dafür liegt darin, dass sonst die bei CAN übliche Arbitrierung nicht funktionieren würde oder ein verändertes Arbitrierungsverfahren eingesetzt werden müsste. Die Arbitrierung findet vor einer Übertragung von Daten über eine Busleitung des Bussystems statt und gewährleistet bei einem CAN Bussystem, dass eine Teilnehmerstation des Bussystems zumindest zeitweise einen exklusiven kollisionsfreien Zugriff auf die Busleitung hat.

Die Patentschrift DE 10 2012 110 732 B3 offenbart ein Bussystem mit mehreren über wenigstens eine Kopplungseinrichtung an eine Busleitung angeschlossenen Teilnehmereinheiten, wobei sowohl Teilnehmereinheiten untereinander, als auch eine Teilnehmereinheit mit einem Leitrechner gemäß einem Busprotokoll kommunizieren können. Die Busleitung dient außerdem zur Versorgung der Teilnehmereinheiten mit elektrischer Energie für die Kommunikation. Jede Teilnehmereinheit kann den Teilnehmerstrom gemäß einer ersten Modulation und gemäß einer zweiten Modulation modulieren. Der Gradient des Stromes ist bei der zweiten Modulation kleiner als ein Gradienten-Maximalwert und kleiner als der Gradient des Teilnehmerstromes bei der ersten Modulation.

US 2013/0169421 A1 offenbart ein Bussystem, bei dem eine Energieübertragung und eine Datenübertragung von einem Master an Slave-Teilnehmer induktiv mittels geeigneter Antenneneinrichtungen und Auswerteschaltungen erfolgt.

### Offenbarung der Erfindung

Daher ist es Aufgabe der vorliegenden Erfindung, Vorrichtungen und Verfahren zur Übertragung eines Kommunikationssignals und von elektrischer Leistung zwischen zwei Teilnehmerstationen eines Bussystems bereitzustellen, welche die zuvor genannten Probleme lösen. Insbesondere sollen Vorrichtungen und Verfahren zur Übertragung eines Kommunikationssignals und von elektrischer Leistung zwischen zwei Teilnehmerstationen eines Bussystems bereitgestellt werden, welche bei Bussystemen, wie dem CAN, LIN Bussystem oder anderen Bussystemen, eine einfache, zuverlässige und kostengünstige Übertragung von Signalen und elektrischer Leistung zwischen den zwei Teilnehmerstationen ermöglichen.

Diese Aufgabe wird durch eine Vorrichtung zur Einkopplung eines Kommunikationssignals und von elektrischer Leistung für mindestens einen Elektroverbraucher in eine Busleitung für ein Bussystem mit den Merkmalen des Anspruchs 1 gelöst. Die Vorrichtung umfasst ein Tiefpassfilter zur Filterung des Kommunikationssignals derart, dass Signalfrequenzen unterhalb der Grenzfrequenz des Tiefpassfilters in die Busleitung des Bussystems eingekoppelt werden, und/oder eine Leistungseinkopplungseinrichtung zur Einkopplung von elektrischer Leistung in Form eines hochfrequenten Signals in die Busleitung.

Mit der Vorrichtung wird, anstelle einer Stromversorgung mittels Gleichstromanteil (DC-Anteil), die für die Stromversorgung erforderliche elektrische Leistung als hochfrequentes Signal bereitgestellt und somit hochfrequent über die gemeinsame Leitung für Stromversorgung und Kommunikationssignal übertragen.

Die Vorrichtung kann ganz einfach in einem existierenden Bussystem nachträglich hinzugefügt werden, wodurch eine Ergänzung des Bussystems mit einer Hochfrequenzstromversorgung (HF-Stromversorgung) gewährleistet wird. Es ist demzufolge eine HF-Stromversorgung über ein Bussystem bzw. Kommunikationsleitungen realisiert.

Vorteilhafte weitere Ausgestaltungen der Vorrichtung sind in den abhängigen Ansprüchen angegeben.

Möglicherweise weist die Leistungseinkopplungseinrichtung ein Schaltnetzteil zur Erzeugung des hochfrequenten Signals auf. Alternativ oder zusätzlich kann die Leistungseinkopplungseinrichtung zum Spreizen und/oder Verjittern der Frequenz des hochfrequenten Signals im Frequenzbereich ausgestaltet sein. Alternativ oder zusätzlich ist es auch möglich, dass die Einkopplung des Kommunikationssignals in Bezug auf eine Kommunikation ausgestaltet ist, bei welcher zumindest zeitweise ein exklusiver, kollisionsfreier Zugriff einer von mindestens zwei Teilnehmerstationen des Bussystems auf die Busleitung gewährleistet ist.

Vorteilhaft ist der Leistungseinkopplungseinrichtung ein Hochpassfilter nachgeschaltet zur Filterung des Signals des Schaltnetzteils derart, dass Signalfrequenzen oberhalb der Grenzfrequenz des Hochpassfilters in die Busleitung eingekoppelt werden.

Die Aufgabe wird zudem durch eine Vorrichtung zur Auskopplung eines Kommunikationssignals und von elektrischer Leistung für mindestens einen Elektroverbraucher aus einem Bussignal auf einer Busleitung eines Bussystems mit den Merkmalen des Anspruchs 4 gelöst. Die Vorrichtung umfasst ein Tiefpassfilter zur Filterung des Bussignals derart, dass Signalfrequenzen unterhalb der Grenzfrequenz des Tiefpassfilters aus der Busleitung des Bussystems als Kommunikationssignal ausgekoppelt werden, und eine Leistungsauskopplungseinrichtung zur Auskopplung von elektrischer Leistung in Form eines hochfrequenten Signals aus der Busleitung.

Die Vorrichtung zur Auskopplung kann mit der zuvor beschriebenen Vorrichtung zur Einkopplung zusammenwirken, um die für die Stromversorgung erforderliche elektrische Leistung als hochfrequentes Signal und das Kommunikationssignal nach deren Übertragung über die gemeinsame Leitung bereitzustellen.

Auch die Vorrichtung zur Auskopplung kann ganz einfach in einem existierenden Bussystem nachträglich hinzugefügt werden, wodurch eine Ergänzung des Bussystems mit einer Hochfrequenzstromversorgung (HF-Stromversorgung) gewährleistet wird.

Vorteilhafte weitere Ausgestaltungen der Vorrichtung sind in den abhängigen Ansprüchen angegeben.

Möglicherweise weist die Leistungsauskopplungseinrichtung auf: einen Gleichrichter zur Glättung des hochfrequenten Signals für die Versorgung des Elektroverbrauchers mit der elektrischen Leistung, und ein Tiefpassfilter zur Filterung des vom Gleichrichter gleichgerichteten Signals derart, dass Signalfrequenzen unterhalb der Grenzfrequenz des Tiefpassfilters an den Elektroverbraucher durchgelassen werden.

Der Leistungsauskopplungseinrichtung kann ein Hochpassfilter vorgeschaltet sein zur Filterung des Bussignals derart, dass Signalfrequenzen oberhalb der Grenzfrequenz des Hochpassfilters aus der Busleitung ausgekoppelt werden. Alternativ oder zusätzlich kann die Auskopplung des Kommunikationssignals in Bezug auf eine Kommunikation ausgestaltet sein, bei welcher zumindest zeitweise ein exklusiver, kollisionsfreier Zugriff einer von mindestens zwei Teilnehmerstationen des Bussystems auf die Busleitung gewährleistet ist.

Bei den zuvor beschriebenen Vorrichtungen zur Einkopplung oder Auskopplung ist es denkbar, dass die Grenzfrequenz des Tiefpassfilters und die Grenzfrequenz des Hochpassfilters für eine Grenzfrequenz im Bereich von 20 bis 50 MHz ausgelegt. Dadurch kann das hochfrequente Signal je nach Datenübertragungsrate in einem Frequenzbereich allokiert werden, welcher für ein CAN- oder CAN FD-Signal als Kommunikationssignal nicht von Bedeutung ist.

Alternativ oder zusätzlich kann das Kommunikationssignal gemäß dem CAN Protokoll und/oder dem CAN FD Protokoll und/oder dem TTCAN Protokoll aufgebaut ist.

Die zuvor beschriebenen Vorrichtungen zur Einkopplung oder Auskopplung können auch Teil eines Bussystems sein, das eine Busleitung und mindestens zwei Teilnehmerstationen aufweist, die mittels der Busleitung zur Kommunikation miteinander verbunden sind. Hierbei kann mindestens eine der Teilnehmerstationen eine Vorrichtung zur Einkopplung aufweisen und mindestens eine der Teilnehmerstationen kann eine Vorrichtung zur Auskopplung aufweisen.

Hierbei kann mindestens eine der Teilnehmerstationen auch eine Vorrichtung zur Einkopplung und eine Vorrichtung zur Auskopplung aufweisen. Beispielsweise ist dies für ein Steuergerät mit integriertem Sensor denkbar.

Die zuvor genannte Aufgabe wird zudem durch Verfahren zur Übertragung eines Kommunikationssignals und von elektrischer Leistung zwischen zwei Teilnehmerstationen eines Bussystems nach Anspruch 10 gelöst. Das Verfahren umfasst die Schritte: Einkoppeln des Kommunikationssignals in die Busleitung über ein Tiefpassfilter, das das Kommunikationssignal derart filtert, dass Signalfrequenzen unterhalb der Grenzfrequenz des Tiefpassfilters in die Busleitung des Bussystems eingekoppelt werden, Einkoppeln, mit einer Leistungseinkopplungseinrichtung, von elektrischer Leistung in Form eines hochfrequenten Signals in die Busleitung, Übertragen des Kommunikationssignals und der elektrischen Leistung als Bussignal mit der Busleitung zu dem Elektroverbraucher, Auskoppeln des Kommunikationssignals aus der Busleitung über ein Tiefpassfilter, das das Bussignal derart filtert, dass Signalfrequenzen unterhalb der Grenzfrequenz des Tiefpassfilters aus der Busleitung des Bussystems ausgekoppelt werden, und Auskoppeln, mit einer Leistungsauskopplungseinrichtung, von elektrischer Leistung in Form eines hochfrequenten Signals aus der Busleitung für den Elektroverbraucher.

Das Verfahren erzielt dieselben Vorteile, wie sie zuvor in Bezug auf die Vorrichtungen angegeben sind.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 einen vereinfachten Frequenzgang eines Tiefpassfilters des Bussystems von Fig. 1;
Fig. 3 einen vereinfachten Frequenzgang eines Hochpassfilters des Bussystems von Fig. 1;
Fig. 4 ein vereinfachtes Blockschaltbild eines Bussystems gemäß einem zweiten Ausführungsbeispiel; und
Fig. 5 ein vereinfachtes Blockschaltbild eines Bussystems gemäß einem dritten Ausführungsbeispiel.

In den Figuren sind gleiche oder funktionsgleiche Elemente, sofern nichts anderes angegeben ist, mit denselben Bezugszeichen versehen.

### Beschreibung der Ausführungsbeispiele

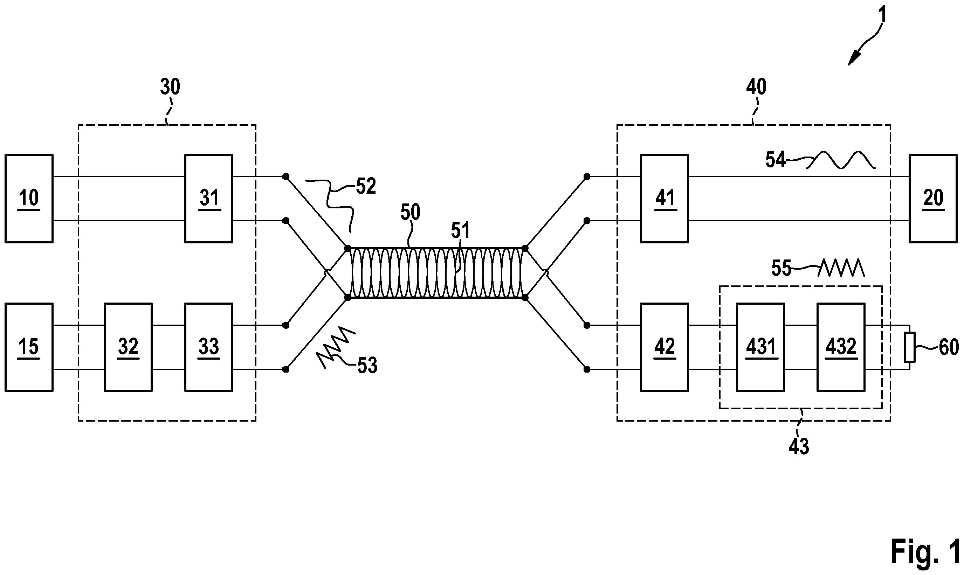

Fig. 1 zeigt ein Bussystem 1, das in einem Fahrzeug, insbesondere einem Kraftfahrzeug, einem Flugzeug, usw., oder im Krankenhaus usw. Verwendung finden kann.

In Fig. 1 hat das Bussystem 1 eine erste Teilnehmerstation 10, eine Energieversorgungseinrichtung 15, eine zweite Teilnehmerstation 20, eine erste Vorrichtung 30, eine zweite Vorrichtung 40 und eine Busleitung 50, welche die Teilnehmerstationen 10, 20, die Energieversorgungseinrichtung 15 und einen als elektrischer Widerstand dargestellten Elektroverbraucher 60 miteinander verbindet. Der Elektroverbraucher 60 ist ein elektrisches Gerät, welches zum Betrieb elektrische Energie benötigt.

Das Bussystem 1 kann beispielsweise ein CAN-Bussystem, ein CAN-FD-Bussystem, ein LIN-Bussystem, ein Bussystem gemäß dem PSI5-Standard oder dem FlexRay-Standard, usw., sein. Ganz allgemein ist das Bussystem bei dem vorliegenden Ausführungsbeispiel für eine Kommunikation ausgestaltet, bei welcher zumindest zeitweise ein exklusiver, kollisionsfreier Zugriff einer der Teilnehmerstationen 10, 20 auf die Busleitung 50 gewährleistet ist.

Die erste Teilnehmerstation 10 kann beispielsweise ein Steuergerät oder eine Anzeigevorrichtung eines Kraftfahrzeugs sein. Die zweite Teilnehmerstation 20 kann beispielsweise ein Sensor eines Kraftfahrzeugs sein.

Die erste Teilnehmerstation 10 und die Energieversorgungseinrichtung 15 sind über die erste Vorrichtung 30 an die Busleitung 50 angeschlossen. Die zweite Teilnehmerstation 20 und der Elektroverbraucher 60 sind über die zweite Vorrichtung 40 an die Busleitung 50 angeschlossen. Über die Busleitung 50 wird ein Bussignal 51 an die zweite Teilnehmerstation 20 übertragen. Die Vorrichtung 30 koppelt ein Kommunikationssignal 52 und ein hochfrequentes Signal 53, das ein elektrische Leistung liefernder elektrischer Strom hoher Frequenz ist, als Bussignal 51 in die Busleitung 50 ein. Die zweite Vorrichtung 40 koppelt das von ihr empfangene Bussignal 51 aus der Busleitung 50 als Kommunikationssignal 54 und hochfrequentes Signal 55 aus.

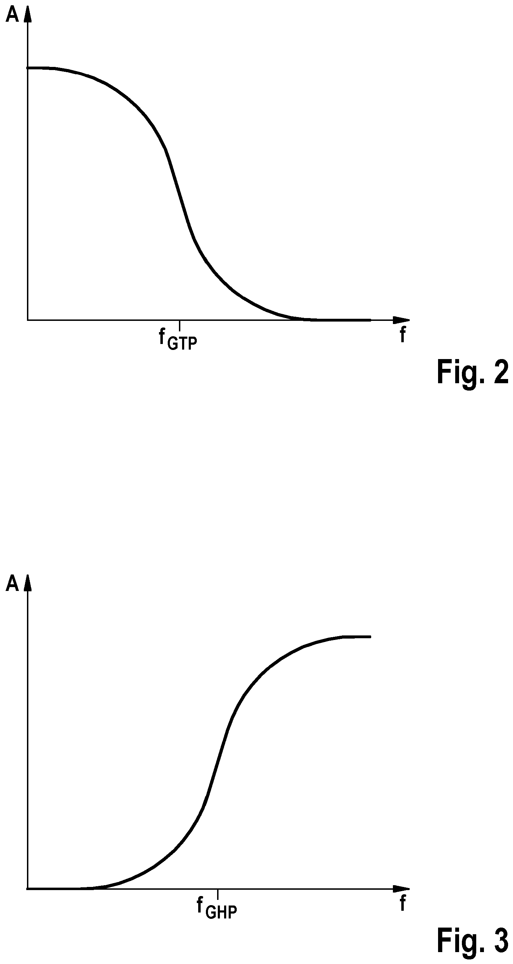

Hierfür hat die Vorrichtung 30 ein Tiefpassfilter 31, welches vom Kommunikationssignal 52 nur die Signalfrequenzen unterhalb seiner Grenzfrequenz f_{GTP} durchlässt, wie in Fig. 2 gezeigt. In Fig. 2 ist der Frequenzgang des Verhältnisses A aus Ausgangsspannung zu Eingangsspannung des Tiefpassfilters 31 über der Frequenz f gezeigt.

Somit werden nur die Signalfrequenzen des Kommunikationssignals 52 unterhalb der Grenzfrequenz f_{GTP} des Tiefpassfilters 31 in die Busleitung 50 des Bussystems 1 eingekoppelt. Das Tiefpassfilter 31 kann als Widerstand-Kondensator-Kombination, die auch allgemein RC-Glied genannt wird, ausgeführt sein. Das Tiefpassfilter 31 dient zum Schutz der Vorrichtung 30 gegen eventuelle elektromagnetische Störstrahlung von anderen elektrischen Geräten des Bussystems 1 oder seiner Umgebung, so dass die Vorgaben in Bezug auf die elektromagnetische Verträglichkeit (EMV) eingehalten werden.

Zudem hat die Vorrichtung 30 eine Leistungseinkopplungseinrichtung 32, die über ein Hochpassfilter 33 ein hochfrequentes Signal 53 in die Busleitung 50 eingekoppelt. Das hochfrequente Signal 53 ist ein für den Elektroverbraucher 60 elektrische Leistung liefernder elektrischer Strom hoher Frequenz. Das hochfrequente Signal 53 kann also auch als hochfrequentes Leistungssignal bezeichnet werden.

Der elektrische Strom wird von der Energieversorgungseinrichtung 15 geliefert und mit Hilfe der Leistungseinkopplungseinrichtung 32 in das hochfrequente Signal 53 gewandelt. Die Leistungseinkopplungseinrichtung 32 kann demzufolge als ein Hochfrequenzgenerator und/oder Schaltnetzteil ausgeführt sein.

Das Hochpassfilter 33 der Vorrichtung 30 lässt vom hochfrequenten Signal 53 nur die Signalfrequenzen oberhalb seiner Grenzfrequenz f_{GHP} durch, wie in Fig. 3 gezeigt. In Fig. 3 ist der Frequenzgang des Verhältnisses A aus Ausgangsspannung zu Eingangsspannung des Hochpassfilters 33 über der Frequenz f gezeigt.

Somit werden nur die Signalfrequenzen des hochfrequenten Signals 53 oberhalb der Grenzfrequenz f_{GHP} des Hochpassfilters 33 in die Busleitung 50 des Bussystems 1 eingekoppelt. Das Hochpassfilter 33 kann als Kondensator-Widerstand-Kombination, die auch allgemein CR-Glied genannt wird, ausgeführt sein.

Vorzugsweise liegen die Grenzfrequenz f_{GTP} und die Grenzfrequenz f_{GHP} so weit auseinander (f_{GTP} < f_{GHP}), dass die wechselweise Beeinflussung sehr gering ist. In diesem Fall überlappen sich die Spektren (genutzten Frequenzen) des Kommunikationssignals 52 und des zur Bereitstellung der elektrischen Leistung vorgesehenen hochfrequenten Signals 53 nicht, da die Signale wechselseitig auf den beiden Pfaden hinreichend gedämpft sind. Bei Filterung kann z.B. durch Erhöhung der Trennschärfe die wechselweise Beeinflussung verringert werden.

Die Trennfrequenz oder die Grenzfrequenz f_{GTP} des Tiefpassfilters 31 und die Trennfrequenz oder die Grenzfrequenz f_{GHP} des Hochpassfilters 33 können im Bereich von 20 bis 50 MHz liegen. Die Wahl der Grenzfrequenzen f_{GTP}, f_{GHP} richtet sich je nachdem danach, mit welcher Symbolrate oder Datenrate das Bussystem 1 betrieben wird. Bei den Frequenzen im Bereich von 20 bis 50 MHz sind bei einem CAN Bussystem typischerweise nur wenige Signalteile des Kommunikationssignals 52 vorhanden.

Die Wahl der Frequenz fp des hochfrequenten Signals 53 zur Leistungsübertragung kann nach unterschiedlichen EMV-Kriterien gewählt werden. Beispielsweise kann das hochfrequente Signal 53 auch über einen Frequenzbereich gespreizt und verjittert werden, um die spektrale Leistungsdichte des Signals 53 zu senken. Zur Spreizung oder Streuung im Frequenzspektrum können zusätzlich oder alternativ zu den verjitterten Signalen auch Pseudo-Noise-Signale und/oder mehrere Träger, wie bei einem Takt eine zentralen Verarbeitungseinheit (CPU = Central Processing Unit) genutzt werden.

Wie in Fig. 1 außerdem gezeigt, hat die Vorrichtung 40 ebenfalls ein Tiefpassfilter 41 und ein Hochpassfilter 42. Das Tiefpassfilter 41 hat die gleiche Funktion wie das Tiefpassfilter 31. Das Hochpassfilter 42 hat die gleiche Funktion wie das Hochpassfilter 33.

Die zweite Vorrichtung 40 hat zudem eine Leistungsauskopplungseinrichtung 43 mit einem Schaltnetzteil 431, der das hochfrequente Signal 53 oder Leistungssignal einem Tiefpassfilter 432 zuführt. Auch das Tiefpassfilter 432 hat die gleiche Funktion wie das Tiefpassfilter 31.

Somit wird bei der zweiten Teilnehmerstation 20 neben einer Tielpassfilterung mit dem Tiefpassfilter 41 zur Erlangung des Kommunikationssignals 54 auch eine Auskopplung eines hochfrequenten Signals 55 durch das an den Wellenwiderstand der Busleitung 50 angepasste Hochpassfilter 42 durchgeführt. Hierbei wird anschließend mit dem Schaltnetzteil 43, das als Gleichrichter ausgeführt ist, eine Gleichrichtung und optionale Tiefpassfilterung vorgenommen. Damit wird eine Glättung des Signals 55 erreicht, das als Versorgung des Elektroverbrauchers 60 mit elektrischer Leistung dient.

Über die Busleitung 50 kann somit eine Nachricht in der Form des Kommunikationssignals 52 und des auf der Seite der Teilnehmerstation 20 empfangenen Kommunikationssignals 54 zwischen den Teilnehmerstationen 10, 20 übertragen werden. Zusätzlich wird mit der Busleitung 50 auch die Stromversorgung für den Elektroverbraucher 60 bei der zweiten Teilnehmerstation 20 bereitgestellt.

In einer Ausgestaltung kann die erste Teilnehmerstation 10 auch eine bereits existierende CAN-Teilnehmerstation (CAN-Knoten) sein, welche mit dem Tiefpassfilter 31 an eine existierende Busleitung 50 angeschlossen wird. Für die anderen CAN-Teilnehmerstationen wird eine entsprechende optionale Ergänzung mit einem Tiefpassfilter 41 vorgenommen.

Somit wird bei dem zuvor beschriebenen Bussystem 1 bei der Teilnehmerstation 10 eine Umwandlung eines elektrischen Stroms zur Energieversorgung des Elektroverbrauchers 60 in ein hochfrequentes Signal 53 z.B. durch das Schaltnetzteil 32 vorgenommen und über das Hochpassfilter 33, das zur Entkopplung der Impedanz im tiefen Frequenzbereich dient, in die Busleitung 50 eingekoppelt. Hierbei empfiehlt sich die ausgangsseitige Anpassung des Hochpassfilters 33 an den Wellenwiderstand der Busleitung 50.

Durch die EMV-Kriterien wird der Anwendungsbereich besonders vorteilhaft bei einfachen Sensoren gesehen, die robuster gegen elektromagnetische Störstrahlungen sind, da die eventuelle Abstrahlung/Leistungsdichte proportional mit der Leistungsaufnahme sinkt. Hierbei ergibt sich allerdings gerade für einfache Sensoren durch die hohe Stückzahl ein großes Einsparpotential für die Verkabelung des Bussystems 1.

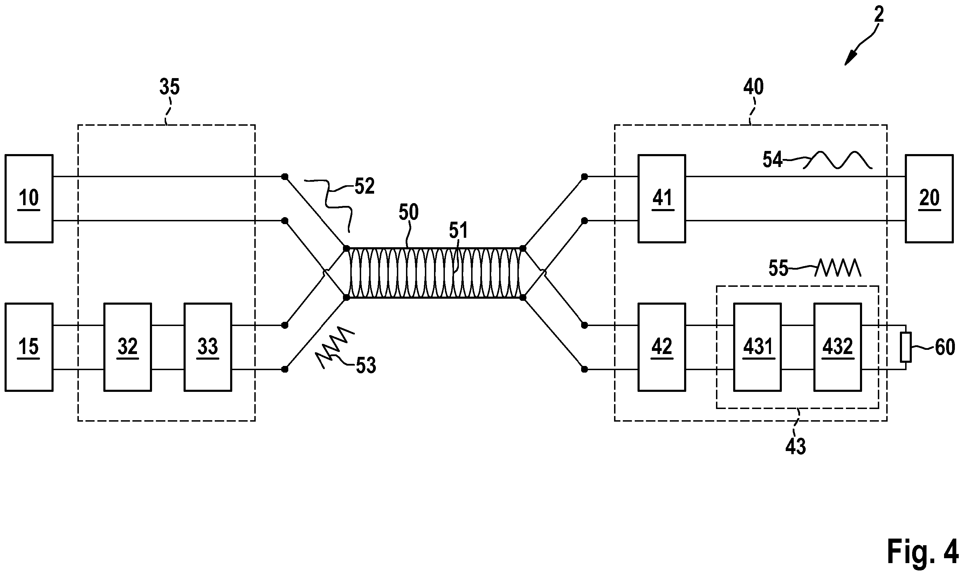

Fig. 4 zeigt ein Bussystem 2 gemäß einem zweiten Ausführungsbeispiel. Das Bussystem 2 gemäß dem zweiten Ausführungsbeispiel ist in weiten Teilen auf die gleiche Weise aufgebaut, wie in Bezug auf das Bussystem 1 gemäß dem ersten Ausführungsbeispiel beschrieben.

Im Unterschied zum Bussystem 1 gemäß dem ersten Ausführungsbeispiel hat das Bussystem 2 gemäß dem zweiten Ausführungsbeispiel jedoch eine Vorrichtung 35, die kein Tiefpassfilter 31 wie bei Fig. 1 aufweist. Dies kann beispielsweise bei einem CAN-Bussystem 2 von Vorteil sein, bei welchem die CAN Kommunikationssteuereinrichtung (CAN Controller) bereits die Funktion des Tiefpassfilters 31 erfüllt, oder wenn die Situation vorliegt, dass aufgrund von Kostengründen keine zusätzlichen Bauteile erwünscht sind. In diesem Fall ist es dann vorteilhaft, das hochfrequente Signal 53 oder Leistungssignal in einem hinreichend hohen Frequenzbereich anzusiedeln, in dem die Signalfrequenzen des Kommunikationssignals nur gering beeinflusst werden (i.A. fällt das übliche Spektrum zu hohen Frequenzen stark ab).

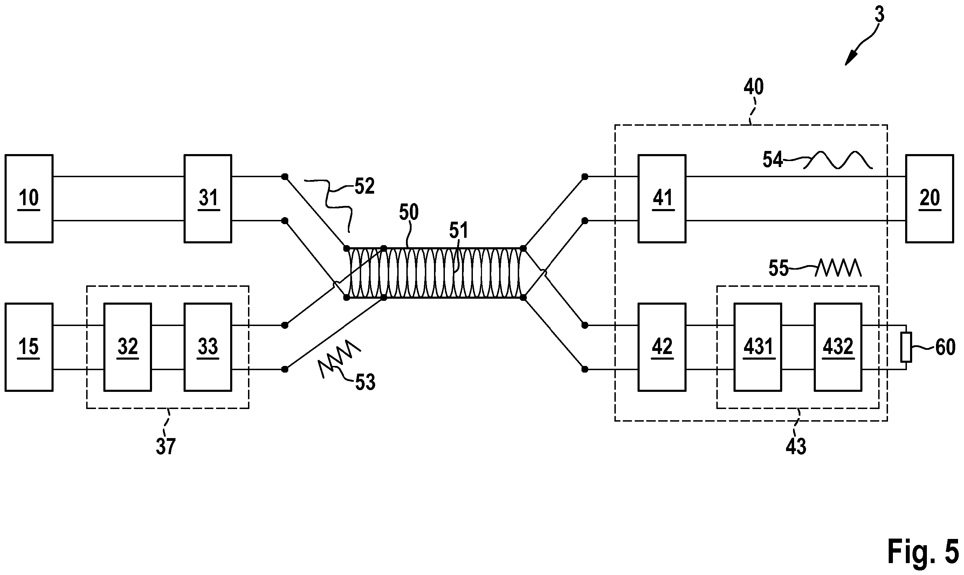

Fig. 5 zeigt ein Bussystem 3 gemäß einem dritten Ausführungsbeispiel. Das Bussystem 3 gemäß dem dritten Ausführungsbeispiel ist in weiten Teilen auf die gleiche Weise aufgebaut, wie in Bezug auf das Bussystem 1 gemäß dem ersten Ausführungsbeispiel beschrieben.

Im Unterschied zum Bussystem 1 gemäß dem ersten Ausführungsbeispiel ist bei dem Bussystem 3 gemäß dem dritten Ausführungsbeispiel die Einkopplung des hochfrequenten Signals 53 zur Versorgung des Elektroverbrauchers 60 mit elektrischer Leistung an einer anderen Stelle an der Busleitung 50 vorgesehen als die Einkopplung des Kommunikationssignals 52. Die Einkopplung des hochfrequenten Signals 53 kann an beliebiger Stelle an der Busleitung 50 erfolgen. Daher hat das Bussystem 3 eine Vorrichtung 37, welche ebenfalls kein Tiefpassfilter 31 aufweist, wie bei dem zweiten Ausführungsbeispiel beschrieben.

Alle zuvor beschriebenen Ausgestaltungen der Bussysteme 1, 2, 3, der Teilnehmerstationen 10, 20, der Busleitung 50 und des Verfahrens können einzeln oder in allen möglichen Kombinationen Verwendung finden. Insbesondere können alle Merkmale der zuvor beschriebenen Ausführungsbeispiele beliebig kombiniert oder auch weggelassen werden. Zusätzlich sind insbesondere folgende Modifikationen denkbar.

Das Bussystem 1, 2, 3, mit der Busleitung 50 gemäß den Ausführungsbeispielen ist anhand eines auf dem CAN-Protokoll basierenden Bussystems beschrieben. Das Bussystem gemäß den Ausführungsbeispielen kann jedoch auch eine andere Art von Kommunikationsnetz sein. Es ist vorteilhaft, jedoch nicht zwangsläufige Voraussetzung, dass bei dem Kommunikationssystem 1 bei dem ersten Bussystem zumindest für bestimmte Zeitspannen ein exklusiver, kollisionsfreier Zugriff einer Teilnehmerstation 10, 20 auf einen gemeinsamen Kanal gewährleistet ist.

Die Anzahl der Teilnehmerstationen 10, 20 ist beliebig wählbar. Es können auch mehr als zwei Teilnehmerstationen Es können auch nur Teilnehmerstationen 10 oder Teilnehmerstationen 20 im Bussystem 1, 2, 3 vorhanden sein.

Als Modifikation der Bussysteme 1, 2, 3 ist es auch denkbar, die Masse als zusätzliche Verbindung zwischen den Teilnehmerstationen 10, 20 für die Übertragung des hochfrequenten Signals 53 zu nutzen. Dies ist beispielsweise durch Phantom-Speisung möglich.

Bei allen Ausführungsbeispielen können die Filter 31, 33, 41, 42, 432 in unterschiedlicher Form ausgestaltet sein. Beispielsweise ist eine Ausführung mit/ohne Trenntransformator oder Common- Mode Choke (CMC) einsetzbar. Außerdem ist eine Kombination der Tiefpassfilter 31, 41, 432 mit Common- Mode Choke (CMC) denkbar.

Zur Erzeugung der HF-Leistung an der Energieversorgungseinrichtung 15 als Quelle können unterschiedliche Verfahren eingesetzt werden. Die bereits genannten Schatznetzteile sind nur eine von vielen Möglichkeiten.

An der Senke bzw. dem Elektroverbraucher 60 können verschiedene Prinzipien zur Umsetzung des Schaltnetzteils 431 als Gleichrichter genutzt werden. Beispielsweise ist eine Gleichrichtfunktion auch mit einer Diodenschaltung möglich.

Die Anpassung der Hochpassfilter 33, 42 an die Busleitung 50 bzw. deren Wellenwiderstand ist adaptiv möglich, also angepasst an die jeweils vorliegenden Gegebenheiten möglich. Dadurch können auch gegebenenfalls auftretende Schwankungen durch unterschiedliche Lasten, wie mehrere Teilnehmerstationen 10, 20, ausgeglichen werden.

Die Energieversorgungseinrichtung 15 kann in die Teilnehmerstation 10 oder 20 integriert sein oder auch separat vorgesehen sein.

Der Elektroverbraucher 60 muss nicht in die Teilnehmerstation 20 integriert sein, wie beispielsweise, wenn die Teilnehmerstation 20 ein Sensor ist. Der Elektroverbraucher 60 kann auch separat oder zusätzlich zu der Teilnehmerstation 20, beispielsweise als weiterer Sensor, vorgesehen sein.

Im Produkt bzw. den Teilnehmerstationen 10, 20 ist eine Kombination mit anderen Kommunikationssystemen denkbar, so dass die Busleitung 50 gleichzeitig neben dem CAN-System im HF-Bereich durch parallele, möglichst voneinander entkoppelte, HF-Kommunikationssysteme genutzt werden kann.

## Patentansprüche

1. Vorrichtung (30; 35; 37) zur Einkopplung eines Kommunikationssignals (52) und von elektrischer Leistung für mindestens einen Elektroverbraucher (60) in eine Busleitung (50) für ein Bussystem (1; 2; 3), mit
einem Tiefpassfilter (31) zur Filterung des Kommunikationssignals (52) derart, dass Signalfrequenzen unterhalb einer Grenzfrequenz (f_{GTP}) des Tiefpassfilters (31) in die Busleitung (50) des Bussystems (1; 2; 3) eingekoppelt werden,
**gekennzeichnet durch** eine Leistungseinkopplungseinrichtung (32) zur Einkopplung von elektrischer Leistung in Form eines hochfrequenten Signals (53) in die Busleitung (50),
wobei die Leistungseinkopplungseinrichtung (32) zum Spreizen und/oder Verjittern der Frequenz des hochfrequenten Signals (53) im Frequenzbereich ausgestaltet ist.

2. Vorrichtung (30; 35; 37) nach Anspruch 1,
wobei die Leistungseinkopplungseinrichtung (32) ein Schaltnetzteil zur Erzeugung des hochfrequenten Signals (53) aufweist.

3. Vorrichtung (30; 35; 37) nach Anspruch 1 oder 2,
wobei die Einkopplung des Kommunikationssignals (52) in Bezug auf eine Kommunikation ausgestaltet ist, bei welcher zumindest zeitweise ein exklusiver, kollisionsfreier Zugriff einer von mindestens zwei Teilnehmerstationen (10, 20) des Bussystems (1; 2; 3) auf die Busleitung (50) gewährleistet ist.

4. Vorrichtung (30; 35; 37) nach Anspruch 2 oder 3, wobei der Leistungseinkopplungseinrichtung (32) ein Hochpassfilter (33) nachgeschaltet ist zur Filterung des Signals des Schaltnetzteils derart, dass Signalfrequenzen oberhalb einer Grenzfrequenz (f_{GHP}) des Hochpassfilters (33) in die Busleitung (50) eingekoppelt werden.

5. Vorrichtung (40) zur Auskopplung eines Kommunikationssignals (52) und von elektrischer Leistung für mindestens einen Elektroverbraucher (60) aus einem Bussignal (51) auf einer Busleitung (50) eines Bussystems (1; 2; 3), mit
einem Tiefpassfilter (41) zur Filterung des Bussignals (51) derart, dass Signalfrequenzen unterhalb einer Grenzfrequenz des Tiefpassfilters (41) aus der Busleitung (50) des Bussystems (1; 2; 3) als Kommunikationssignal (54) ausgekoppelt werden,
**gekennzeichnet durch** eine Leistungsauskopplungseinrichtung (43) zur Auskopplung von elektrischer Leistung in Form eines hochfrequenten Signals (55) aus der Busleitung (50),
wobei der Leistungsauskopplungseinrichtung (43) ein Hochpassfilter (42) vorgeschaltet ist zur Filterung des Bussignals (51) derart, dass Signalfrequenzen oberhalb einer Grenzfrequenz (f_{GHP}) des Hochpassfilters (42) aus der Busleitung (50) ausgekoppelt werden.

6. Vorrichtung (40) nach Anspruch 5, wobei die Leistungsauskopplungseinrichtung (43) aufweist
einen Gleichrichter (431) zur Glättung des hochfrequenten Signals (55) für die Versorgung des Elektroverbrauchers (60) mit der elektrischen Leistung, und
ein Tiefpassfilter (432) zur Filterung des vom Gleichrichter (431) gleichgerichteten Signals derart, dass Signalfrequenzen unterhalb der Grenzfrequenz (f_{GTP}) des Tiefpassfilters (432) an den Elektroverbraucher (60) durchgelassen werden.

7. Vorrichtung (40) nach Anspruch 5 oder 6,
wobei die Auskopplung des Kommunikationssignals (54) in Bezug auf eine Kommunikation ausgestaltet ist, bei welcher zumindest zeitweise ein exklusiver, kollisionsfreier Zugriff einer von mindestens zwei Teilnehmerstationen (10, 20) des Bussystems (1; 2; 3) auf die Busleitung (50) gewährleistet ist.

8. Vorrichtung (30; 35; 37; 40) nach einem der Ansprüche 1 bis 7,
wobei die Grenzfrequenz (f_{GTP}) des Tiefpassfilters (31; 41, 431) und die Grenzfrequenz (f_{GHP}) des Hochpassfilters (33; 42) für eine Grenzfrequenz im Bereich von 20 bis 50 MHz ausgelegt sind, und/oder
wobei das Kommunikationssignal (52, 54) gemäß dem CAN Protokoll und/oder dem CAN FD Protokoll und/oder dem TTCAN Protokoll aufgebaut ist.

9. Bussystem (1; 2; 3), mit
einer Busleitung (50), und
mindestens zwei Teilnehmerstationen (10, 20), die mittels der Busleitung (50) zur Kommunikation miteinander verbunden sind,
wobei mindestens eine der Teilnehmerstationen (10, 20) eine Vorrichtung (30; 35; 37) nach einem der Ansprüche 1 bis 4 oder nach Anspruch 8 bei Abhängigkeit von einem der Ansprüche 1 bis 4 aufweist und mindestens eine der Teilnehmerstationen (10, 20) eine Vorrichtung (40) nach einem der Ansprüche 5 bis 7 oder nach Anspruch 8 bei Abhängigkeit von einem der Ansprüche 5 bis 7 aufweist.

10. Bussystem (1; 2; 3) nach Anspruch 9, wobei mindestens eine der Teilnehmerstationen (10, 20) aufweist
eine Vorrichtung (30; 35; 37) nach einem der Ansprüche 1 bis 4 oder nach Anspruch 8 bei Abhängigkeit von einem der Ansprüche 1 bis 4, und
eine Vorrichtung (40) nach einem der Ansprüche 5 bis 7 oder nach Anspruch 8 bei Abhängigkeit von einem der Ansprüche 5 bis 7.

11. Verfahren zur Übertragung eines Kommunikationssignals (52) und von elektrischer Leistung zwischen zwei Teilnehmerstationen (10, 20) eines Bussystems (1; 2; 3), mit den Schritten
Einkoppeln des Kommunikationssignals (52) in die Busleitung (50) über ein Tiefpassfilter (31), das das Kommunikationssignal (52) derart filtert, dass Signalfrequenzen unterhalb einer Grenzfrequenz (f_{GTP}) des Tiefpassfilters (31) in die Busleitung (50) des Bussystems (1; 2; 3) eingekoppelt werden,
Einkoppeln, mit einer Leistungseinkopplungseinrichtung, (32) von elektrischer Leistung in Form eines hochfrequenten Signals (53) in die Busleitung (50),
wobei die Leistungseinkopplungseinrichtung (32) die Frequenz des hochfrequenten Signals (53) im Frequenzbereich zum spreizt und/oder verjittert,
Übertragen des Kommunikationssignals (52) und der elektrischen Leistung als Bussignal (51) mit der Busleitung (50) zu dem Elektroverbraucher (60),
Auskoppeln des Kommunikationssignals (52) aus der Busleitung (50) über ein Tiefpassfilter (41), das das Bussignal (51) derart filtert, dass Signalfrequenzen unterhalb der Grenzfrequenz (f_{GTP}) des Tiefpassfilters (41) aus der Busleitung (50) des Bussystems (1; 2; 3) ausgekoppelt werden, und
Auskoppeln, mit einer Leistungsauskopplungseinrichtung (43), von elektrischer Leistung in Form eines hochfrequenten Signals (55) aus der Busleitung (50) für den Elektroverbraucher (60)
wobei der Leistungsauskopplungseinrichtung (43) ein Hochpassfilter (42) vorgeschaltet ist zur Filterung des Bussignals (51) derart, dass Signalfrequenzen oberhalb einer Grenzfrequenz (fGHP) des Hochpassfilters (42) aus der Busleitung (50) ausgekoppelt werden.

## Claims

1. Apparatus (30; 35; 37) for inputting a communication signal (52) and electric power for at least one electrical load (60) into a bus line (50) for a bus system (1; 2; 3), having
a low-pass filter (31) for filtering the communication signal (52) such that signal frequencies below a cutoff frequency (f_{GTP}) of the low-pass filter (31) are input into the bus line (50) of the bus system (1; 2; 3),
**characterized by** a power input device (32) for inputting electric power in the form of a high-frequency signal (53) into the bus line (50),
wherein the power input device (32) is configured to spread and/or jitter the frequency of the high-frequency signal (53) in the frequency domain.

2. Apparatus (30; 35; 37) according to Claim 1, wherein the power input device (32) has a switched-mode power supply unit for generating the high-frequency signal (53).

3. Apparatus (30; 35; 37) according to Claim 1 or 2, wherein the input of the communication signal (52) is configured in regard to a communication for which, at least intermittently, exclusive, collision-free access by one of at least two subscriber stations (10, 20) of the bus system (1; 2; 3) to the bus line (50) is ensured.

4. Apparatus (30; 35; 37) according to Claim 2 or 3, wherein the power input device (32) has a downstream high-pass filter (33) for filtering the signal of the switched-mode power supply unit such that signal frequencies above a cutoff frequency (f_{GHP}) of the high-pass filter (33) are input into the bus line (50).

5. Apparatus (40) for outputting a communication signal (52) and electric power for at least one electrical load (60) from a bus signal (51) on a bus line (50) of a bus system (1; 2; 3), having
a low-pass filter (41) for filtering the bus signal (51) such that signal frequencies below a cutoff frequency of the low-pass filter (41) are output from the bus line (50) of the bus system (1; 2; 3) as a communication signal (54), **characterized by** a power output device (43) for outputting electric power in the form of a high-frequency signal (55) from the bus line (50),
wherein the power output device (43) has an upstream high-pass filter (42) for filtering the bus signal (51) such that signal frequencies above a cutoff frequency (f_{GHP}) of the high-pass filter (42) are output from the bus line (50).

6. Apparatus (40) according to Claim 5, wherein the power output device (43) has
a rectifier (431) for smoothing the high-frequency signal (55) for supplying the electrical load (60) with the electric power, and
a low-pass filter (432) for filtering the signal rectified by the rectifier (431) such that signal frequencies below the cutoff frequency (f_{GTP}) of the low-pass filter (432) are passed to the electrical load (60).

7. Apparatus (40) according to Claim 5 or 6,
wherein the output of the communication signal (54) is configured in regard to a communication for which, at least intermittently, exclusive, collision-free access by one of at least two subscriber stations (10, 20) of the bus system (1; 2; 3) to the bus line (50) is ensured.

8. Apparatus (30; 35; 37; 40) according to one of Claims 1 to 7,
wherein the cutoff frequency (f_{GTP}) of the low-pass filter (31; 41, 431) and the cutoff frequency (f_{GHP}) of the high-pass filter (33; 42) are configured for a cutoff frequency in the range from 20 to 50 MHz, and/or
wherein the communication signal (52, 54) is designed in accordance with the CAN protocol and/or the CAN FD protocol and/or the TTCAN protocol.

9. Bus system (1; 2; 3), having
a bus line (50), and
at least two subscriber stations (10, 20) that are connected to one another by means of the bus line (50) for communication,
wherein at least one of the subscriber stations (10, 20) has an apparatus (30; 35; 37) according to one of Claims 1 to 4 or according to Claim 8 when dependent on one of Claims 1 to 4 and at least one of the subscriber stations (10, 20) has an apparatus (40) according to one of Claims 5 to 7 or according to Claim 8 when dependent on one of Claims 5 to 7.

10. Bus system (1; 2; 3) according to Claim 9, wherein at least one of the subscriber stations (10, 20) has
an apparatus (30; 35; 37) according to one of Claims 1 to 4 or according to Claim 8 when dependent on one of Claims 1 to 4, and
an apparatus (40) according to one of Claims 5 to 7 or according to Claim 8 when dependent on one of Claims 5 to 7.

11. Method for transmitting a communication signal (52) and electric power between two subscriber stations (10, 20) of a bus system (1; 2; 3), having the steps of inputting the communication signal (52) into the bus line (50) via a low-pass filter (31) that filters the communication signal (52) such that signal frequencies below a cutoff frequency (f_{GTP}) of the low-pass filter (31) are input into the bus line (50) of the bus system (1; 2; 3),
inputting, using a power input device (32), electric power in the form of the high-frequency signal (53) into the bus line (50),
wherein the power input device (32) spreads and/or jitters the frequency of a high-frequency signal (53) in the frequency domain to,
transmitting the communication signal (52) and the electric power as a bus signal (51) to the electrical load (60) using the bus line (50),
outputting the communication signal (52) from the bus line (50) via a low-pass filter (41) that filters the bus signal (51) such that signal frequencies below the cutoff frequency (f_{GTP}) of the low-pass filter (41) are output from the bus line (50) of the bus system (1; 2; 3), and outputting, using a power output device (43), electric power in the form of a high-frequency signal (55) from the bus line (50) for the electrical load (60),
wherein the power output device (43) has an upstream high-pass filter (42) for filtering the bus signal (51) such that signal frequencies above a cutoff frequency (fGHP) of the high-pass filter (42) are output from the bus line (50).

## Revendications

1. Arrangement (30 ; 35 ; 37) d'injection d'un signal de communication (52) et de puissance électrique pour au moins un récepteur électrique (60) dans une ligne de bus (50) pour un système de bus (1 ; 2 ; 3), comprenant
un filtre passe-bas (31) destiné à filtrer le signal de communication (52) de telle sorte que les fréquences de signal inférieures à une fréquence limite (f_{GTP}) du filtre passe-bas (31) sont injectées dans la ligne de bus (50) du système de bus (1 ; 2 ; 3),
**caractérisé par** un dispositif d'injection de puissance (32) destiné à injecter de la puissance électrique sous la forme d'un signal à haute fréquence (53) dans la ligne de bus (50),
le dispositif d'injection de puissance (32) étant configuré pour étaler et/ou appliquer une gigue à la fréquence du signal à haute fréquence (53) dans la plage de fréquences.

2. Arrangement (30 ; 35 ; 37) selon la revendication 1, le dispositif d'injection de puissance (32) possédant un bloc d'alimentation à découpage destiné à générer le signal à haute fréquence (53).

3. Arrangement (30 ; 35 ; 37) selon la revendication 1 ou 2, l'injection du signal de communication (52) étant configurée en référence à une communication lors de laquelle un accès exclusif sans collision à la ligne de bus (50) par une parmi au moins deux stations d'abonné (10, 20) du système de bus (1 ; 2 ; 3) est garanti au moins temporairement.

4. Arrangement (30 ; 35 ; 37) selon la revendication 2 ou 3, un filtre passe-haut (33) étant branché en aval du dispositif d'injection de puissance (32) pour le filtrage du signal du bloc d'alimentation à découpage de telle sorte que les fréquences de signal supérieures à une fréquence limite (f_{GHP}) du filtre passe-haut (33) sont injectées dans la ligne de bus (50).

5. Arrangement (40) de découplage d'un signal de communication (52) et de puissance électrique pour au moins un récepteur électrique (60) depuis un signal de bus (51) sur une ligne de bus (50) d'un système de bus (1 ; 2 ; 3), comprenant
un filtre passe-bas (41) destiné à filtrer le signal de bus (51) de telle sorte que les fréquences de signal inférieures à une fréquence limite du filtre passe-bas (41) sont découplées hors de la ligne de bus (50) du système de bus (1 ; 2 ; 3) sous la forme d'un signal de communication (54),
**caractérisé par** un dispositif de découplage de puissance (43) destiné à découpler de la puissance électrique sous la forme d'un signal à haute fréquence (55) hors de la ligne de bus (50),
un filtre passe-haut (42) étant branché en amont du dispositif de découplage de puissance (43) pour le filtrage du signal de bus (51) de telle sorte que les fréquences de signal supérieures à une fréquence limite (f_{GHP}) du filtre passe-haut (42) sont découplées hors de la ligne de bus (50).

6. Arrangement (40) selon la revendication 5, le dispositif de découplage de puissance (43) possédant un redresseur (431) destiné à lisser le signal à haute fréquence (55) pour l'alimentation du récepteur électrique (60) en puissance électrique, et
un filtre passe-bas (432) destiné à filtrer le signal redressé par le redresseur (431) de telle sorte les fréquences de signal inférieures à la fréquence limite (f_{GTP}) du filtre passe-bas (432) sont autorisées à être transmises au récepteur électrique (60).

7. Arrangement (40) selon la revendication 5 ou 6, le découplage du signal de communication (54) étant configuré en référence à une communication lors de laquelle un accès exclusif sans collision à la ligne de bus (50) par une parmi au moins deux stations d'abonné (10, 20) du système de bus (1 ; 2 ; 3) est garanti au moins temporairement.

8. Arrangement (30 ; 35 ; 37 ; 40) selon l'une des revendications 1 à 7, la fréquence limite (f_{GTP}) du filtre passe-bas (31 ; 41 ; 431) et la fréquence limite (f_{GHP}) du filtre passe-haut (33 ; 42) étant conçues pour une fréquence limite dans la plage de 20 à 50 MHz, et/ou
le signal de communication (52, 54) étant constitué conformément au protocole CAN et/ou au protocole CAN FD et/ou au protocole TTCAN.

9. Système de bus (1 ; 2 ; 3), comprenant
une ligne de bus (50) et
au moins deux stations d'abonné (10, 20) qui sont reliées l'une à l'autre au moyen de la ligne de bus (50) pour communiquer,
au moins l'une des stations d'abonné (10, 20) possédant un arrangement (30 ; 35 ; 37) selon l'une des revendications 1 à 4 ou selon la revendication 8 en cas de dépendance à l'une des revendications 1 à 4 et au moins l'une des stations d'abonné (10, 20) possédant un arrangement (40) selon l'une des revendications 5 à 7 ou selon la revendication 8 en cas de dépendance à l'une des revendications 5 à 7.

10. Système de bus (1 ; 2 ; 3) selon la revendication 9, au moins l'une des stations d'abonné (10, 20) possédant un arrangement (30 ; 35 ; 37) selon l'une des revendications 1 à 4 ou selon la revendication 8 en cas de dépendance à l'une des revendications 1 à 4, et
un arrangement (40) selon l'une des revendications 5 à 7 ou selon la revendication 8 en cas de dépendance à l'une des revendications 5 à 7.

11. Procédé de transmission d'un signal de communication (52) et de puissance électrique entre deux stations d'abonné (10, 20) d'un système de bus (1 ; 2 ; 3), comprenant les étapes suivantes
injection du signal de communication (52) dans la ligne de bus (50) par le biais d'un filtre passe-bas (31) qui filtre le signal de communication (52) de telle sorte que les fréquences de signal inférieures à une fréquence limite (f_{GTP}) du filtre passe-bas (31) sont injectées dans la ligne de bus (50) du système de bus (1 ; 2 ; 3),
injection, avec un dispositif d'injection de puissance (32), de puissance électrique sous la forme d'un signal à haute fréquence (53) dans la ligne de bus (50),
le dispositif d'injection de puissance (32) étalant et/ou appliquant une gigue à la fréquence du signal à haute fréquence (53) dans la plage de fréquences à,
transmission du signal de communication (52) et de la puissance électrique sous forme de signal de bus (51) avec la ligne de bus (50) jusqu'au récepteur électrique (60),
découplage du signal de communication (52) hors de la ligne de bus (50) par le biais d'un filtre passe-bas (41) qui filtre le signal de bus (51) de telle sorte que les fréquences de signal inférieures à la fréquence limite (f_{GTP}) du filtre passe-bas (41) sont découplées hors de la ligne de bus (50) du système de bus (1 ; 2 ; 3) et, découplage, avec un dispositif de découplage de puissance (43), de puissance électrique sous la forme d'un signal à haute fréquence (55) hors de la ligne de bus (50) pour le récepteur électrique (60),
un filtre passe-haut (42) étant branché en amont du dispositif de découplage de puissance (43) pour le filtrage du signal de bus (51) de telle sorte que les fréquences de signal supérieures à une fréquence limite (f_{GHP}) du filtre passe-haut (42) sont découplées hors de la ligne de bus (50).
